Europäisches Patentamt

European Patent Office

Office européen des brevets

(11) Numéro de publication: **0 270 514**
**A1**

## (12) DEMANDE DE BREVET EUROPEEN

(21) Numéro de dépôt: **87870159.8**

(22) Date de dépôt: **13.11.87**

(51) Int. Cl.⁴: **A 47 G 9/02**

(30) Priorité: **13.11.86 BE 217404**

(43) Date de publication de la demande:
**08.06.88 Bulletin 88/23**

(84) Etats contractants désignés:
**AT BE CH DE ES FR GB GR IT LI LU NL SE**

(71) Demandeur: **Replyuk, Erno**
**51, Nederweg**
**B-8700 Izegem (BE)**

(72) Inventeur: **Replyuk, Erno**
**51, Nederweg**
**B-8700 Izegem (BE)**

(54) **Assemblage pour une résolution thermique optimale des sacs de couchage.**

(57) Cette invention concerne un assemblage de nappes de garnissage,qui,de par leur disposition et addition de tissus,développent la plus haute résolution thermique des sacs de couchage.

Il s'agit en fait de la création de deux couches d'air séparées par une nappe de garnissage,où l'air chaud et l'air froid peuvent se brasser lentement sans créer de choc thermique.donc sans condensation.

Ceci en conjugaison avec les tissus appropriés.

FIG 1

FIG 2

EP 0 270 514 A1

## Description

"Assemblage pour une résolution thermique optimale des sacs de couchage"

Cette invention concerne un assemblage de nappes de garnissage,qui,de par leurs dispositions et additions de tissus,développent la plus haute résolution thermique des sacs de couchage.

L'invention a pour but d'éliminer la condensation dans les sacs de couchage,et de permettre un maximum de chaleur dans les sacs de couchage,même par très grand froid.

Jusqu'a présent,les systèmes visaient surtout a éliminer le refroidissement des sacs de couchage a cause des piqures,et,du contact direct"chaud-froid",qui avait pour conséquence,des sacs de couchage peu performants.

Grâce a mon assemblage,de trois nappes de garnissage,dont deux seulement,sont localement renduent solidaires,par coutures,a des tissus,ayant chacuns des propriétés différentes,bien déterminées,en fonction du rôle qu'ils doivent avoir dans cet assemblage,et la troisième,qui est prise en sandwiche entre les deux autres,et sans piqures,ni tissus,une lente convection peut se faire entre l'air chaud provenant du corps,par un tissu suffisamment ajouré vers l'interieur de l'assemblage et l'air froid,venant de l'extérieur,et dont le tissu de l'autre nappe de garnissage en distille l'entrée,grâce a son tissage serré et ses particularités.

De cette façon,nous obtenons deux couches d'air,isolantes,et dont la convection peut se faire lentement dans la nappe de garnissage centrale,évitant ainsi de créer de la condensation et gardant plus de chaleur à l'intérieur du sac de couchage,qui,grâce a cet assemblage peut être utilisé par temps chaud également.

Non seulement la condensation a l'intérieur du sac est évitée,mais a l'intérieur de la tente aussi,car le sac de couchage n'étant pas surchauffé il n'y a pas transpiration excessive,donc moins de condensation dans la tente.

Il n'entre pas dans le cadre de la présente demande de brevet de désigner les matériaux qui conviennent particulièrement à cet usage,puisqu'ils sont connus des hommes de métier.De même les dimensions ne seront pas citées dans le cadre de la présente demande puisqu'elles sont fonction d'impératifs bien connus.

D'autre détails et avantages de l'invention resortiront de la description qui sera donnée ci-après d'un assemblage pour une résolution thermique optimale des sacs de couchage,selon l'invention.

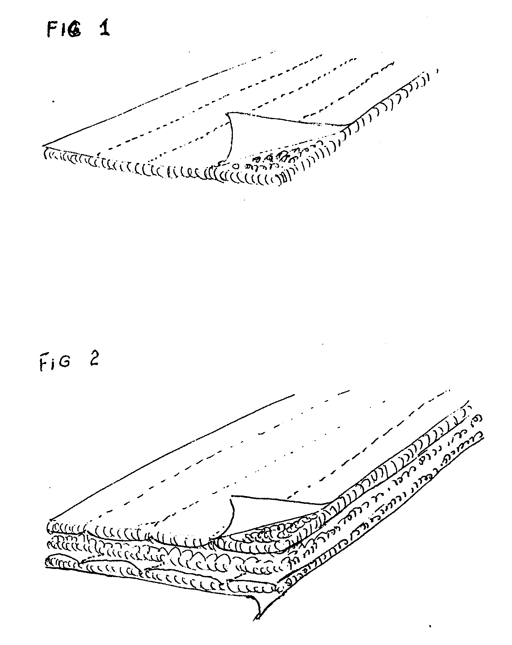

Cette description n'est donnée qu'à titre d'exemple et ne limite pas l'invention.Les notations de références se rapportent aux figures ci-jointes. La figure 1 est une vue d'une des nappes de garnissage,solidaire localement d'un tissu.

La figure 2 montre l'assemblage tel que décrite dans l'invention.

L'assemblage est réalisé sous une forme de composite(2) dans laquelle une nappe de garnissage sans tissu ni piqureest emprisonnée entre deux nappes de garnissage,chacunes renduent solidaires localement par piqures avec un tissu(1)

## Revendications

Ensemble formant assemblage de nappes de garnissage pour une résolution thermique optimale des sacs de couchage,caractérisé en ce que l'assemblage comprend la création de deux couches d'air emprisonnées entre deux nappes de garnissage,chacune rendue localement solidaire par couture d'un tissu aux propriétés bien définies dans l'invention,et séparées par une nappe de garnissage,prise en sandwiche,et qui ne possède ni piqure,ni tissu.

0270514

FIG 1

FIG 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | BE-A- 531 520 (LONZA)<br>* Revendication 9; page 3, lignes 1-15; figures 2,5 *<br>--- | 1 | A 47 G 9/02 |
| Y | FR-A-2 457 666 (ETABLISSEMENTS A. LEOPOLD & FILS)<br>* Page 2, lignes 1-11 *<br>--- | 1 | |
| Y | US-A-2 217 621 (KATZNER)<br>* Figure 3; page 1, colonne 1, ligne 49 - colonne 2, ligne 13 *<br>--- | 1 | |
| A | DE-C- 150 937 (STEINER)<br>* En entier *<br>--- | 1 | |
| A | GB-A-1 080 329 (SLUMBERLAND GROUP)<br>* Figure 2 *<br>----- | 1 | |

DOMAINES TECHNIQUES
RECHERCHES (Int. Cl.4)

A 47 G

Le présent rapport a été établi pour toutes les revendications

| Lieu de la recherche | Date d'achèvement de la recherche | Examinateur |
|---|---|---|
| LA HAYE | 18-02-1988 | BEUGELING G.L.H. |